# EUROPÄISCHE PATENTSCHRIFT

(11) **EP 2 978 951 B1**
(45) Veröffentlichungstag und Bekanntmachung des Hinweises auf die Patenterteilung: **23.11.2016**
(21) Anmeldenummer: 14705540.4
(22) Anmeldetag: 21.02.2014
(51) Int. Cl.: F02B 75/22, F01B 1/04, F02B 75/18

(54) **HUBKOLBEN-BRENNKRAFTMASCHINE**
RECIPROCATING-PISTON INTERNAL COMBUSTION ENGINE
MOTEUR À COMBUSTION INTERNE À PISTONS ALTERNATIFS

(30) Priorität: 28.03.2013 DE 102013205554
(43) Veröffentlichungstag der Anmeldung: 03.02.2016
(73) Patentinhaber: Bayerische Motoren Werke Aktiengesellschaft, 80809 München (DE)
(72) Erfinder: HOEHL, Johannes, 82216 Maisach, Ortsteil Oberlappach (DE)
(86) Internationale Anmeldenummer: PCT/EP2014/053449
(87) Internationale Veröffentlichungsnummer: WO 2014/154404

(56) Entgegenhaltungen:
- EP-A2- 0 999 356
- DE-A1-102008 020 423
- JP-A- S6 421 245
- US-B1- 6 257 178

## Beschreibung

Die Erfindung betrifft eine Hubkolben-Brennkraftmaschine mit den Merkmalen aus dem Oberbegriff des Patentanspruchs 1.

Zum technischen Umfeld wird beispielsweise auf die weltweit bekannten Harley-Davidson V-2-Brennkraftmaschinen mit ihrem typischen "Zweizylindersound" für Harley-Davidson Motorräder hingewiesen.

Eine Weiterentwicklung dieser weltberühmten V-2-Hubkolben-Brennkraftmaschinen fand durch Jim Feulings sog. Projekt W3 statt. Bei diesem Projekt, bei dem wie bei einer V-2-Brennkraftmaschine die zwei Zylinder V-förmig hintereinander angeordnet sind und die Pleuel auf einem gemeinsamen Hubzapfen der Kurbelwelle wirken, handelt es sich jedoch bei Feulings Konstruktion um drei Zylinder, die an ein "W" erinnern. Daher die Bezeichnung "W3". Feuling konstruierte ein neues Kurbelgehäuse, auf das ein dritter Zylinder samt Zylinderkopf um 45° versetzt in das V montiert wird. Alle drei Zylinder spannen eine Ebene auf. Somit entstand aus dem Twin-Cam-V-Twin ein Triple-Cam-W-Three. Möglich wurde das durch die Verwendung von einem Hauptpleuel und zwei Nebenpleuel, die sich einen gemeinsamen Hubzapfen der Kurbelwelle teilen. Dies ist eine Konstruktion, die bei Flugzeugmotoren mit radialer Zylinderanordnung auch heute noch Anwendung findet. Feulings weltberühmte Ausnahmekonstruktion ist zum einen durch das US Design Patent US D 449,620 S und weiter durch das US Patent US 417,674 geschützt.

Nachteilig an Feulings W3 Konstruktion ist der große Zylinderwinkel, der relativ viel Bauraum benötigt.

Einen anderen Weg zur Darstellung einer Dreizylinder-Hubkolben-Brennkraftmaschine beschreibt die deutsche Offenlegungsschrift
DE 10 2008 020 423 A1. Aus dieser Offenlegungsschrift ist eine Hubkolben-Brennkraftmaschine mit drei Zylindern in V-Anordnung, insbesondere für die Verwendung in einem Motorrad bekannt. Die Hubkolben-Brennkraftmaschine umfasst eine Kurbelwelle sowie einen ersten äußeren, einen zweiten äußeren und einen mittleren Zylinder. Jedem Zylinder sind ein Kolben und ein Pleuel zugeordnet, wobei die äußeren Zylinder in einer gemeinsamen, durch die Kurbelwellenachse gehenden Ebene liegen und der mittlere Zylinder in einer zu dieser geneigten, ebenfalls durch die Kurbelwellenachse gehenden Ebene liegt. Die Dreizylinder-Hubkolben-Brennkraftmaschine zeichnet sich dadurch aus, dass die Kurbelwelle zwei Hubzapfen aufweist und die Pleuel des ersten äußeren Zylinders und des mittleren Zylinders gemeinsam am ersten Hubzapfen angreifen und das Pleuel des zweiten äußeren Zylinders am zweiten Hubzapfen angreift.

Nachteilig an der aus der DE 10 2008 020 423 A1 bekannten Dreizylinder-Hubkolben-Brennkraftmaschine ist die relativ große Baubreite, die sich insbesondere bei Verwendung für ein Motorrad nachteilig auswirkt.

Daher liegt der vorliegenden Erfindung die Aufgabe zugrunde, eine Dreizylinder-Hubkolben-Brennkraftmaschine darzustellen, welche sowohl in der Breite als auch in dem von den Zylindern aufgespannten Winkelbereich eine kleinere Bauform als der bekannte Stand der Technik aufweist.

Diese Aufgabe wird durch das Merkmal im kennzeichnenden Teil des Patentanspruchs 1 gelöst.

Die vorliegende Erfindung ermöglicht somit gegenüber anderen Stern-Hubkolben-Brennkraftmaschinen einen engeren Zylinderwinkel (V-Winkel) und gleichzeitig gegenüber anderen Hubkolben-Brennkraftmaschinen die elegante und filigrane Anmutung eines Motors aus der Fliegertradition. Außerdem ermöglicht die vorliegende Erfindung aufgrund der möglichen Zylinderwinkel eine W3-Hubkolben-Brennkraftmaschine nahezu im Bauraum einer bekannten V2-Hubkolben-Brennkraftmaschine zu implantieren; die Baubreite nimmt nur in einem unkritischen Rahmen zu.

Besonders bevorzugt ist der dritte Zylinder gemäß Patentanspruch 2 mit dem dritten Kolben mittig in dem V angeordnet. Die symmetrische Anordnung ermöglicht eine einfache mechanische Auslegung.

Die Ausgestaltung gemäß Patentanspruch 3 ermöglicht ebenfalls eine einfache mechanische Auslegung.

Die Ausgestaltung gemäß Patentanspruch 4 ermöglicht ebenfalls eine einfache mechanische Auslegung und ist eine zweite bevorzugte Ausführungsvariante.

Die unterschiedlichen Kröpfungswinkel β gemäß Patentanspruch 5 ermöglicht die Realisierung unterschiedlicher Zündfolgen, wodurch die Akustik der Hubkolben-Brennkraftmaschine positiv beeinflusst werden kann, was bei Verbau in einem Motorrad von Vorteil ist. Darüber hinaus bietet der Kröpfungswinkel von 180° Kurbelwinkel die Möglichkeit der Verwendung einer "ebenen" Kurbelwelle, die fertigungstechnisch, beispielsweise durch Schmieden, wesentlich einfacher und kostengünstiger herstellbar ist.

Die Ausgestaltung gemäß Patentanspruch 6 beeinflusst die Laufeigenschaften bzw. die Laufruhe (NVH = noise, vibration, harshness) der Dreizylinder-Hubkolben-Brennkraftmaschine in vorteilhafter Weise.

Für bestmöglichen mechanischen Aufbau sowie einer anmutenden Optik wird die Kurbelwelle der Hubkolben-Brennkraftmaschine gemäß Patentanspruch 7 bevorzugt quer zu einer Fahrtrichtung des Einspurfahrzeuges, beispielsweise eines Motorrades, eingebaut.

Im Folgenden ist die erfindungsgemäße Dreizylinder-Hubkolben-Brennkraftmaschine anhand von vier Figuren näher erläutert.
- Fig. 1: zeigt eine Seitenansicht eines Kurbeltriebs für eine erfindungsgemäße Hubkolben-Brennkraftmaschine.
- Fig. 2: zeigt eine Vorderansicht auf den Kurbeltrieb der erfindungsgemäßen Hubkolben-Brennkraftmaschine.
- Fig. 3: zeigt eine dreidimensionale Darstellung des Kurbeltriebs der erfindungsgemäßen Hubkolben-Brennkraftmaschine.
- Fig. 4: zeigt eine Aufsicht auf eine erfindungsgemäße HubkolbenBrennkraftmaschine.

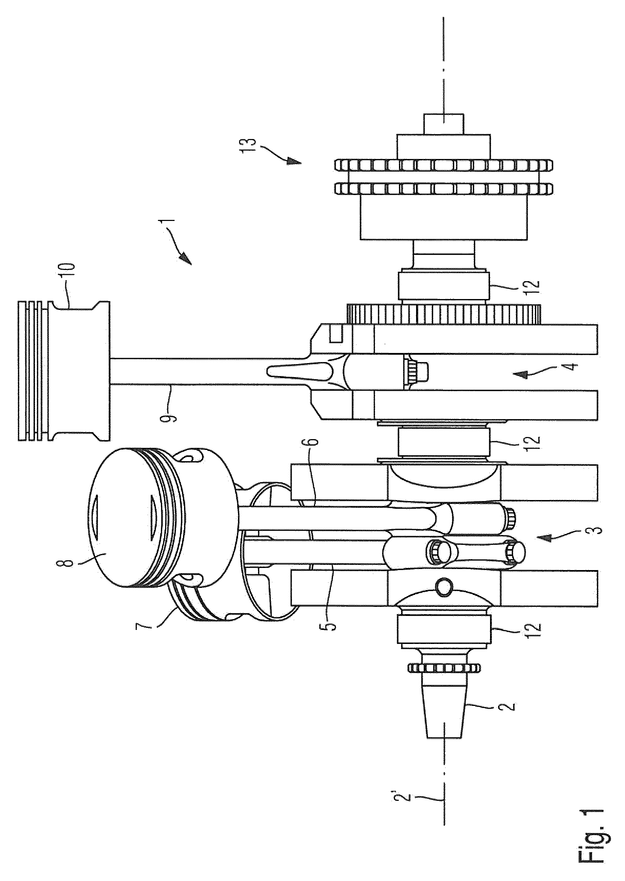

Im Folgenden gelten in den Fig. 1 bis 4 für gleiche Bauelemente die gleichen Bezugsziffern.

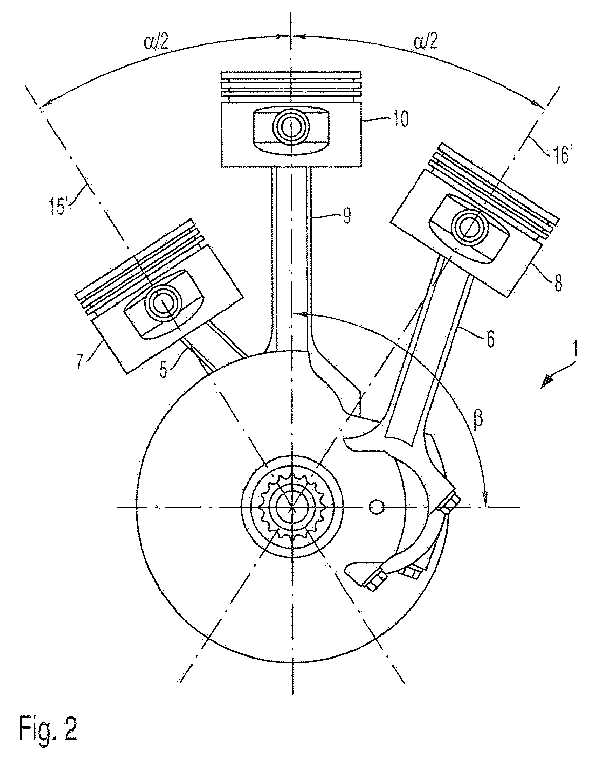

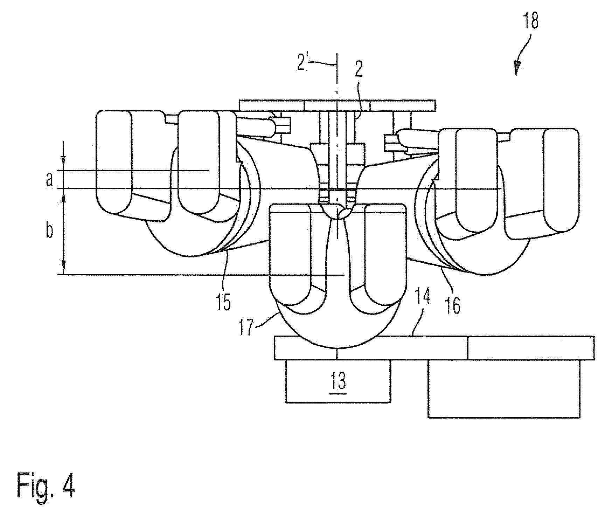

Fig. 1 zeigt eine Seitenansicht eines Kurbeltriebs 1 für eine erfindungsgemäße dreizylindrige Hubkolben-Brennkraftmaschine 18. Eine Kurbelwellenachse 2' einer Kurbelwelle 2 ist strichpunktiert dargestellt. Die Hubkolben-Brennkraftmaschine 18 weist einen ersten, einen zweiten und einen dritten Zylinder 15, 16, 17 (dargestellt in Fig. 4) und den Kurbeltrieb 1 mit einer in einem nicht dargestellten Kurbelgehäuse drehbar gelagerten Kurbelwelle 2 mit einem ersten und einem zweiten Hubzapfen 3, 4 auf, wobei dem ersten Hubzapfen 3 ein erstes und ein zweites Pleuel 5, 6 für einen ersten und einen zweiten Kolben 7, 8 und dem zweiten Hubzapfen 4 ein drittes Pleuel 9 für einen dritten Kolben 10 zugeordnet sind. Der erste und der zweite Zylinder 15, 16 sind mit dem ersten und dem zweiten Kolben 7, 8 V-förmig angeordnet. Erfindungsgemäß ist der dritte Zylinder 17 mit dem dritten Kolben 10 in dem V des ersten und des zweiten Zylinders 15, 16 angeordnet (dargestellt in Fig. 2). Zur Lagerung der Kurbelwelle 2 weist diese drei Lagerzapfen 12 auf. Stirnseitig, benachbart zum dritten Zylinder 17 ist an die Kurbelwelle 2 ein Abtrieb 13 mit einem doppelten Zahnritzel angeordnet.

Besonders bevorzugt ist der dritte Zylinder 17 mit dem dritten Kolben 10 mittig in dem von dem ersten Zylinder 15 an dem zweiten Zylinder 16 gebildeten V angeordnet. Dies ermöglicht einen besonders einfachen mechanischen Aufbau der erfindungsgemäßen Hubkolben-Brennkraftmaschine 18.

Eine weitere Vereinfachung der mechanischen Bauweise wird dadurch erzielt, dass der erste, der zweite und der dritte Zylinder 15, 16, 17 in einer Ausrichtung einer Kurbelwellenachse 2' zueinander versetzt angeordnet sind. Durch diesen Versatz kann in einfacher Weise die Baubreite der erfindungsgemäßen Hubkolben-Brennkraftmaschine 18 beeinflusst werden und somit auch der V-Winkel α des ersten und des zweiten Zylinders 15, 16.

In einer weiteren bevorzugten, in den Fig. 1 bis 4 nicht dargestellten Ausführungsvariante sind der erste und der zweite Zylinder 15, 16 in einer Ebene senkrecht zur Kurbelwellenachsrichtung und der dritte Zylinder 17 in Kurbelwellenachsrichtung versetzt zur Ebene angeordnet. In dieser Variante werden der erste und/oder der zweite Kolben 7, 8 beispielsweise mit einem Gabelpleuel ausgestattet.

Eine erste Zylinderachse 15' und eine zweite Zylinderachse 16' weisen einen V-Winkel a zwischen 45° und 80° auf, dargestellt in Fig. 2.

In drei weiteren Ausführungsvarianten weisen der erste und der zweite Hubzapfen 3, 4 einen Kröpfungswinkel β von 90° oder bevorzugt 180° oder 270° Kurbelwinkel, auf. Die 90° (270°) Variante ist in Fig. 2 dargestellt. Die unterschiedlichen Kröpfungswinkel β ermöglichen in vorteilhafter Weise die Realisierung unterschiedlicher Zündfolgen, wodurch die Akustik der Hubkolben-Brennkraftmaschine positiv beeinflusst werden kann, was bei einem Verbau in einem Motorrad von Vorteil ist. Darüber hinaus bietet der Kröpfungswinkel von 180° Kurbelwinkel die Möglichkeit der Verwendung einer "ebenen" Kurbelwelle, die fertigungstechnisch, beispielsweise durch Schmieden, wesentlich einfacher und kostengünstiger herstellbar ist.

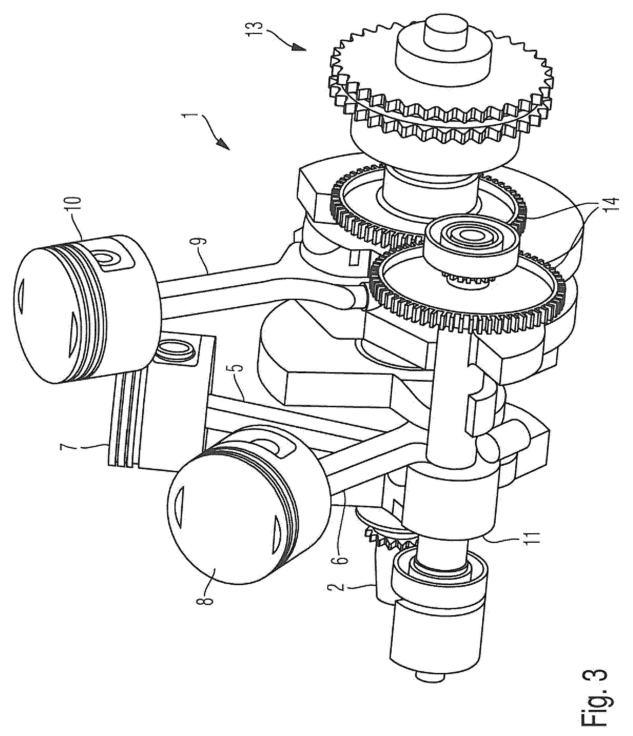

Für eine besonders gute Laufruhe der erfindungsgemäßen Hubkolben-Brennkraftmaschine 18 ist eine von der Kurbelwelle 2 antreibbare, parallel zur Kurbelwelle 2 ausgerichtete Massenausgleichswelle 11 erster Ordnung vorgesehen. Ersichtlich ist diese Massenausgleichswelle 11 in Fig. 3.

Die erfindungsgemäße Hubkolben-Brennkraftmaschine 18 ist für ein Einspurfahrzeug, wie ein Motorrad, vorgesehen.

Beim Einbau der Hubkolben-Brennkraftmaschine 18 in ein Einspurfahrzeug erfolgt der Einbau der Kurbelwellenlängsachse 2' bevorzugt quer zu einer Fahrrichtung des Einspurfahrzeuges. Jedoch ist auch ein Längseinbau denkbar und möglich.

Fig. 2 zeigt eine Stirnansicht des Kurbeltriebs 1 für eine erfindungsgemäße Hubkolben-Brennkraftmaschine 18.

Aus Fig. 2 ist insbesondere der V-Winkel zwischen der ersten Zylinderachse 15' und der zweiten Zylinderachse 16' erkennbar, der in zwei halbe V-Winkel α/2 aufgeteilt ist. In dem dargestellten Ausführungsbeispiel beträgt der V-Winkel α 65° Kurbelwinkel, kann jedoch in anderen Ausführungsbeispielen zwischen 45° und 90° Kurbelwinkel variieren. In wiederum einem weiteren Ausführungsbeispiel muss der V-Winkel α nicht gleichmäßig, d. h. in α/2 aufgeteilt sein. Er kann beispielsweise auch in α/3 und 2α/3 aufgeteilt sein. Über die Winkelvariation ist wiederum der Klang der erfindungsgemäßen dreizylindrigen Brennkraftmaschine 18 beeinflussbar.

Darüber hinaus ist ein Kröpfungswinkel β des ersten und des zweiten Hubzapfens 3, 4 eingezeichnet, der in diesem Ausführungsbeispiel 90° beträgt. In weiteren Ausführungsbeispielen kann der Kröpfungswinkel β auch 180° oder 270° Kurbelwinkel betragen, selbstverständlich sind auch Winkelabweichungen möglich.

Fig. 3 zeigt nochmals eine dreidimensionale Ansicht des Kurbeltriebs 1 für die erfindungsgemäße Hubkolben-Brennkraftmaschine 18. Erkennbar ist neben dem Kurbeltrieb 1 auch die bereits erwähnte Ausgleichswelle 11 erster Ordnung, die über ein Zahnradpaar 14 von der Kurbelwelle 2 phasenstarr antreibbar ist. Ausgleichswellen erster Ordnung sind dem Fachmann allgemein bekannt, weshalb diese hier nicht näher erläutert wird.

Fig. 4 zeigt eine Aufsicht auf drei nicht separat bezifferte Zylinderköpfe des ersten Zylinders 15 und des zweiten Zylinders 16 und des dritten Zylinders 17 der erfindungsgemäßen Hubkolben-Brennkraftmaschine 18. Die Kurbelwelle ist wieder mit 2 beziffert und der Abtrieb der Kurbelwelle 2 mit 13.

In Fig. 4 ist ein Versatz des ersten Zylinders 15 zum zweiten Zylinder 16 mit a beschriftet, sowie ein Versatz des zweiten Zylinders 16 zum dritten Zylinder 17 mit b.

In einer weiteren, nicht dargestellten Ausführungsvariante sind der erste und der zweite Zylinder 15, 16 in einer Ebene senkrecht zur Kurbelwellenachsrichtung und der dritte Zylinder 17 in Kurbelwellenachsrichtung versetzt zur Ebene angeordnet. In dieser Variante werden der erste und/oder der zweite Kolben 7, 8 beispielsweise mit einem Gabelpleuel ausgestattet.

Die vorliegende Erfindung ermöglicht somit gegenüber anderen Stern-Hubkolben-Brennkraftmaschinen einen engeren Zylinderwinkel (V-Winkel) und gleichzeitig gegenüber anderen Hubkolben-Brennkraftmaschinen die elegante und filigrane Anmutung einer Hubkolben-Brennkraftmaschine aus der Fliegertradition.

Außerdem ermöglicht die vorliegende Erfindung aufgrund der möglichen Zylinderwinkel eine W-3-Hubkolben-Brennkraftmaschine 18 nahezu im Bauraum einer bekannten V-2-Hubkolben-Brennkraftmaschine zu implantieren; die Baubreite nimmt nur in einem unkritischen Rahmen zu.

Ebenso kann mit einer solchen erfindungsgemäßen Hubkolben-Brennkraftmaschine 18 der Sound einer V-2-Hubkolben-Brennkraftmaschine nachgebildet werden, der sogar noch etwas "frischer" klingt.

Neben der erfindungsgemäßen Ausgestaltung einer Dreizylinder-Hubkolben-Brennkraftmaschine kann auch eine Vierzylinder-Hubkolben-Brennkraftmaschine dargestellt werden, wobei je zwei Pleuel mit Kolben auf einem gemeinsamen Hubzapfen angeordnet sind, die beiden Hubzapfen sind auf einer gemeinsamen Kurbelwelle angeordnet.

### Bezugszeichenliste:

- 1.: Kurbeltrieb
- 2.: Kurbelwelle
- 2': Kurbelwellenachse
- 3.: erster Hubzapfen
- 4.: zweiter Hubzapfen
- 5.: erstes Pleuel
- 6.: zweites Pleuel
- 7.: erster Kolben
- 8.: zweiter Kolben
- 9.: drittes Pleuel
- 10.: dritten Kolben
- 11.: Massenausgleichswelle
- 12.: Lagerzapfen
- 13.: Abtrieb
- 14.: Zahnradpaar
- 15.: erster Zylinder
- 15': erste Zylinderachse
- 16.: zweiter Zylinder
- 16': zweite Zylinderachse
- 17.: dritter Zylinder
- 18.: Hubkolben-Brennkraftmaschine

## Patentansprüche

1. Hubkolben-Brennkraftmaschine (18), mit einem ersten Zylinder (15), einem zweiten Zylinder (16) und einem dritten Zylinder (17) und mit einem Kurbeltrieb (1) mit einer, in einem Kurbelgehäuse drehbar gelagerten Kurbelwelle (2) mit einem ersten und einem zweiten Hubzapfen (3, 4), wobei dem ersten Hubzapfen (3) ein erstes und ein zweites Pleuel (5, 6) für einen ersten und einen zweiten Kolben (7, 8) und dem zweiten Hubzapfen (4) ein drittes Pleuel (9) für einen dritten Kolben (10) zugeordnet sind, wobei der erste und der zweite Zylinder (15, 16) mit dem ersten und dem zweiten Kolben (7, 8) V-förmig angeordnet sind,
**dadurch gekennzeichnet, dass** die Hubkolben-Brennkraftmaschine (18) für ein Einspurfahrzeug vorgesehen ist, und dass der dritte Zylinder (17) mit dem dritten Kolben (10) in dem V angeordnet ist, wobei eine Zylinderachse des ersten Zylinders (15') und eine Zylinderachse des zweiten Zylinders (16') einen V-Winkel α zwischen 45° und 80° einschließen.

2. Hubkolben-Brennkraftmaschine nach Patentanspruch 1,
**dadurch gekennzeichnet, dass** der dritte Zylinder (17) mit dem dritten Kolben (10) mittig in dem V angeordnet ist.

3. Hubkolben-Brennkraftmaschine nach Patentanspruch 1 oder 2, **dadurch gekennzeichnet, dass** der erste, der zweite und der dritte Zylinder (15, 16, 17) in einer Kurbelwellenachsrichtung zueinander versetzt angeordnet sind.

4. Hubkolben-Brennkraftmaschine nach Patentanspruch 1 oder 2,
**dadurch gekennzeichnet, dass** der erste und der zweite Zylinder (15, 16) in einer Ebene senkrecht zur Kurbelwellenachsrichtung und der dritte Zylinder (17) in Kurbelwellenachsrichtung versetzt zur Ebene angeordnet ist.

5. Hubkolben-Brennkraftmaschine nach einem der Patentansprüche 1 bis 4, **dadurch gekennzeichnet, dass** die Hubzapfen (3, 4) einen Kröpfungswinkel β von bevorzugt 90° oder 180° oder 270° Kurbelwinkel aufweisen.

6. Hubkolben-Brennkraftmaschine nach einem der Patentansprüche 1 bis 5, **dadurch gekennzeichnet, dass** eine von der Kurbelwelle (2) antreibbare parallel. zur Kurbelwelle (2) ausgerichtete Massenausgleichswelle (11) erster Ordnung vorgesehen ist.

7. Hubkolben-Brennkraftmaschine nach einem der Patentansprüche 1 bis 6, **dadurch gekennzeichnet, dass** die Hubkolben-Brennkraftmaschine (18) quer zu einer Fahrtrichtung des Einspurfahrzeuges einbaubar ist.

## Claims

1. A reciprocating piston internal combustion engine (18) having a first cylinder (15), a second cylinder (16) and a third cylinder (17), and having a crankshaft drive (1) with a crankshaft (2) which is mounted rotatably in a crankcase, with a first and a second crank pin (3, 4), wherein associated with the first crank pin (3) is a first and a second connecting rod (5, 6) for a first and a second piston (7, 8) and associated with the second crank pin (4) is a third connecting rod (9) for a third piston (10), wherein the first and the second cylinder (15, 16) are arranged in a V shape with the first and the second piston (7, 8),
**characterised in that** the reciprocating piston internal combustion engine (18) is provided for a single-track vehicle, and **in that** the third cylinder (17) is arranged with the third piston (10) in the V, wherein a cylinder axis (15') of the first cylinder and a cylinder axis (16') of the second cylinder include a V angle α of between 45° and 80°.

2. A reciprocating piston internal combustion engine according to claim 1, **characterised in that** the third cylinder (17) is arranged centrally in the V with the third piston (10).

3. A reciprocating piston internal combustion engine according to claim 1 or claim 2, **characterised in that** the first, the second and the third cylinders (15, 16, 17) are arranged offset relative to one another in an axial direction of the crankshaft.

4. A reciprocating piston internal combustion engine according to claim 1 or claim 2, **characterised in that** the first and the second cylinder (15, 16) are arranged in a plane vertically to the axial direction of the crankshaft and the third cylinder (17) is arranged offset with respect to the plane in the axial direction of the crankshaft.

5. A reciprocating piston internal combustion engine according to any one of claims 1 to 4,
**characterised in that** the crank pins (3, 4) have an offset angle β of preferably 90° or 180° or 270° crank angle.

6. A reciprocating piston internal combustion engine according to any one of claims 1 to 5,
**characterised in that** a mass balancing shaft (11) of the first order is provided which can be driven by the crankshaft (2) and is oriented parallel to the crankshaft (2).

7. A reciprocating piston internal combustion engine according to any one of claims 1 to 6,
**characterised in that** the reciprocating piston internal combustion engine (18) can be installed transversely to a direction of travel of the single-track vehicle.

## Revendications

1. Moteur à combustion interne à pistons alternatifs (18) comprenant un premier cylindre (15), un second cylindre (16) et un troisième cylindre (17) ainsi qu'un mécanisme de commande à bielle et manivelle (1) comprenant un vilebrequin (2) monté mobile en rotation dans un carter moteur, et équipé d'un premier et d'un second manetons (3, 4), au premier maneton (3) étant associées une première et une seconde bielles (5, 6) pour un premier et un second pistons (7, 8), et au second maneton (4) étant associée une troisième bielle (9) pour un troisième piston (10), le premier et le second cylindres (15, 16) équipés du premier et du second pistons (7, 8) étant montés en V,
**caractérisé en ce que**
le moteur à combustion interne à pistons alternatifs (18) est destiné à un véhicule à voie unique, et le troisième cylindre (17) équipé du troisième piston (10) est monté dans le V, l'axe (15') du premier cylindre et l'axe (16') du second cylindre définissant un angle V de α compris entre 45° et 80°.

2. Moteur à combustion interne à pistons alternatifs conforme à la revendication 1,
**caractérisé en ce que**
le troisième cylindre (17) équipé du troisième piston (10) est monté au centre du V.

3. Moteur à combustion interne à pistons alternatifs conforme à la revendication 1 ou 2,
**caractérisé en ce que**
le premier, le second et le troisième cylindres (15, 16, 17) sont décalés les uns par rapport aux autres dans la direction axiale du vilebrequin.

4. Moteur à combustion interne à pistons alternatifs conforme à la revendication 1 ou 2,
**caractérisé en ce que**
le premier et le second cylindres (15, 16) sont montés dans un plan perpendiculaire à la direction axiale du vilebrequin et le troisième cylindre (17) est décalé par rapport à ce plan dans la direction axiale du vilebrequin.

5. Moteur à combustion interne à pistons alternatifs conforme à l'une des revendications 1 à 4,
**caractérisé en ce que**
les manetons (3, 4) ont un angle de coudage β de préférence de 90° ou 180° ou 270° par rapport à l'angle du vilebrequin.

6. Moteur à combustion interne à pistons alternatifs conforme à l'une des revendications 1 à 5,
**caractérisé en ce qu'**
il est prévu un arbre d'équilibrage de masse (11) du premier ordre pouvant être entraîné par le vilebrequin (2) et orienté parallèlement à celui-ci.

7. Moteur à combustion interne à pistons alternatifs conforme à l'une des revendications 1 à 6,
**caractérisé en ce que**
le moteur à combustion interne à piston alternatif (18) peut être monté transversalement au sens de déplacement du véhicule à voie unique.
